# FASCICULE DE BREVET EUROPEEN

(11) **EP 0 801 900 B1**
(45) Date de publication et mention de la délivrance du brevet: **17.07.2002**
(21) Numéro de dépôt: 97420062.8
(22) Date de dépôt: 14.04.1997
(51) Int. Cl.: A22B 5/20

(54) **Procédé et dispositif de guidage dorsal pour la fente d'une carcasse d'animal de boucherie**
Verfahren und Vorrichtung zur dorsalen Führung beim Spalten von Schlachttierkörpern
Method and means for dorsal guiding in carcass splitting

(30) Priorité: 18.04.1996 FR 9605116
(43) Date de publication de la demande: 22.10.1997
(73) Titulaire: DURAND INTERNATIONAL (société anonyme), 07210 Baix (FR)
(72) Inventeur: van Horeebeck, Jean, 07200 Aubenas (FR)
(74) Mandataire: Derambure, Christian

(56) Documents cités:
- EP-A- 0 377 542
- DE-A- 2 600 766
- FR-A- 2 576 183

## Description

La présente invention est relative au domaine général de l'abattage d'animaux de boucherie et elle concerne, plus particulièrement, l'opération de fente ou de fendage d'une carcasse après une phase d'éviscération.

Plus spécifiquement, l'objet de l'invention concerne la fente de carcasses d'animaux, tels que les porcins, ovins ou bovins.

L'opération de fente ou de fendage d'une carcasse d'animal est pratiquée depuis toujours en suspendant la carcasse verticalement par les pattes arrière et en exécutant l'opération de fente le long de la colonne vertébrale, au moyen d'un outil de coupe, telle qu'une feuille ou une lame déplacée initialement de façon manuelle.

Cette technique artisanale a été, depuis quelque temps déjà, remplacée par un procédé de fente automatique permettant d'atteindre des cadences de travail compatibles avec les exigences des abattoirs industriels.

Un tel procédé consiste à faire défiler les carcasses, suspendues par l'intermédiaire d'un transporteur ou convoyeur, devant un poste d'intervention consistant en une machine automatique comportant un organe de coupe, pouvant être introduit entre les pattes arrière de la carcasse suspendue, pour agir selon un plan de coupe vertical en exécutant la fente de la carcasse en deux demi-carcasses. L'opération de fente peut intervenir à poste fixe ou à la volée, c'est-à-dire en combinant le déplacement vertical de l'organe de coupe avec un déplacement latéral de la carcasse lorsque le transporteur ou convoyeur est animé d'un défilement continu.

Cette opération de fente ou de découpe longitudinale de la carcasse est particulièrement importante. En effet, il s'agit de réaliser une découpe longitudinale en deux parties proches, le plus possible, de l'égalité en poids, afin d'obtenir deux demi-carcasses dans lesquelles le rapport de viande et d'os est équivalent.

Jusqu'à présent, on a tenté d'observer cette contrainte de précision de coupe en réalisant des systèmes de guidage de l'organe de coupe le long de la colonne vertébrale de l'animal. On connaît, ainsi, une installation de coupe comprenant un châssis mobile, guidé verticalement sur un bâti principal, de manière à pouvoir être déplacé selon une direction verticale et sur lequel est montée une poutre porteuse, mobile horizontalement par rapport au châssis, pour être amenée, à partir d'une position d'effacement, à traverser un plan de déplacement vertical suivi par une carcasse à fendre et qui est suspendue par les pattes arrière. La poutre est équipée d'un organe de coupe, tel que des couteaux mobiles ou une lame rotative. La poutre mobile comporte, également, d'une part, sur une partie antérieure, un dispositif de guidage externe escamotable destiné à être appuyé contre la face dorsale externe de la carcasse et, d'autre part, un organe de guidage interne, disposé pour être situé sous l'organe de coupe et appliqué contre la face dorsale interne, de manière à agir à l'encontre de l'organe de guidage externe.

Les organes de guidage interne et externe selon l'art antérieur sont, généralement, réalisés au moyen de paires de galets et permettent de maintenir l'organe de coupe dans une position sensiblement centrale le long de la colonne vertébrale lors de l'exécution de la fente de la carcasse.

Le document DE-A-2 600 766 décrit une installation comportant un plan de guidage externe présentant une zone d'appui s'étandant dans un plan.

Il est reconnu que ce type d'installation de fente fournit, en général, deux demi-carcasses sensiblement égales. Toutefois, on a constaté, à l'usage, que les organes de guidage selon l'art antérieur n'assument pas complètement leur fonction, de sorte que le partage, résultant de la découpe de la carcasse, n'est pas réalisé avec la précision qu'il serait souhaitable d'atteindre.

De plus, il est apparu que les fentes, obtenues avec une installation équipée d'organes de guidage classiques, ne présentent pas un caractère suffisamment reproductible d'une carcasse à l'autre.

Après des essais suivis d'expérimentations, le demandeur a eu le mérite d'établir que ces anomalies pouvaient être, notamment, attribuées à l'organe de guidage externe qui ne semble pas à même de tenir compte de l'évolution morphologique de la carcasse le long de la colonne vertébrale.

Le demandeur a constaté que la colonne vertébrale d'un animal de boucherie, tel que par exemple un porc, est constituée de vertèbres qualifiées de lombaires, dorsales et cervicales qui présentent des apophyses de longueurs différentes. Ces apophyses, notablement plus proéminentes sur les dernières vertèbres dorsales que sur les vertèbres lombaires, sont responsables d'une modification de la conformation de la face dorsale ou externe de la carcasse à fendre. Cette évolution de la forme de la face dorsale doit aussi être mise au compte d'une modification du type et de la répartition de la masse musculaire le long de la colonne vertébrale.

Il est apparu avantageux de pouvoir tenir compte de la conformation de la carcasse le long de la colonne vertébrale, de manière que l'organe de guidage externe soit à même d'assumer sa fonction de guidage malgré l'évolution morphologique de la carcasse suspendue, au fur et à mesure de la course de descente de l'organe de coupe.

Un objet de l'invention est de répondre aux exigences ci-dessus en proposant un procédé de fente d'une carcasse d'animal consistant :
- à introduire un organe de coupe entre les pattes arrière,
- à presser contre la face interne de la carcasse un organe de guidage interne,
- à appuyer contre la face externe de la carcasse au niveau de la colonne vertébrale un organe de guidage externe agissant à l'encontre de l'organe de guidage interne,
- à mettre en fonction l'organe de coupe,
- et à déplacer l'ensemble selon un plan vertical de coupe.

Selon l'invention, ce procédé consiste à adapter une zone d'appui de l'organe de guidage externe sur la carcasse en fonction de l'évolution morphologique de la face externe le long de la colonne vertébrale, de manière à offrir un premier ensemble de surfaces d'appui, dites externes, adaptées à la morphologie de la face externe d'une région sacro-lombaire jusqu'à une région lombo-dorsale et un deuxième ensemble de surfaces d'appui, dites internes, adaptées à la morphologie d'une région dorsale, les surfaces d'appui externes et internes s'étendant dans deux plans parallèles et espacés.

L'invention concerne, également, un dispositif de guidage à galet destiné à appuyer sur la face externe d'une carcasse d'un animal de boucherie suspendue par les pattes arrière, au niveau de la colonne vertébrale en alignement avec un plan vertical de déplacement et qui permette de mettre en oeuvre le procédé ci-dessus.

Selon l'invention, ce dispositif comporte au moins un galet fou qui définit au moins deux paires, interne et externe, de surfaces d'appui à symétrie de révolution d'axes parallèles contenus dans un plan de référence et perpendiculaires au plan vertical, les surfaces de chacune des paires étant symétriques par rapport au plan vertical et définissant, dans le plan de référence, deux lignes d'appui sensiblement parallèles et espacées.

Enfin, l'invention vise une installation de fente de carcasses d'animaux de boucherie mettant en oeuvre un tel dispositif de guidage.

La **fig. 1** est une élévation schématique d'une installation pour la mise en oeuvre du procédé selon l'invention.

Les **fig. 2** et **3** sont des vues illustrant des phases particulières de mise en oeuvre de l'invention sur la base de la même représentation schématique.

La **fig. 4** est une vue montrant, à plus grande échelle, le procédé et, en partie, le dispositif pour sa mise en oeuvre conformément à l'invention.

La **fig. 5** est une vue selon la ligne **V-V** de la **fig. 4,** partiellement arrachée, montrant une phase du procédé et une première forme de réalisation d'un dispositif de guidage conforme à l'invention.

La **fig. 6** est une vue, analogue à la **fig. 5,** montrant une autre étape du procédé.

La **fig. 7** est une vue, analogue à la **fig. 4,** montrant une forme préférée de réalisation d'un dispositif de guidage conforme à l'invention.

La **fig. 8** est une vue, selon la ligne **VIII-VIII** de la **fig. 7,** partiellement arrachée, illustrant la forme préférée du dispositif de guidage.

La **Fig. 9** illustre une variante de réalisation d'un dispositif de guidage selon l'invention.

La **fig. 10** est une coupe partielle selon la ligne **XI-XI** de la **fig. 9,** illustrant un détail constructif d'un dispositif de guidage selon l'invention.

Les **fig. 11** et **12** illustrent, également, d'autres variantes de réalisation du dispositif de guidage.

Diverses autres caractéristiques ressortent de la description faite ci-dessous en référence aux dessins annexés qui montrent, à titre d'exemples non limitatifs, des formes de réalisation de l'objet de l'invention.

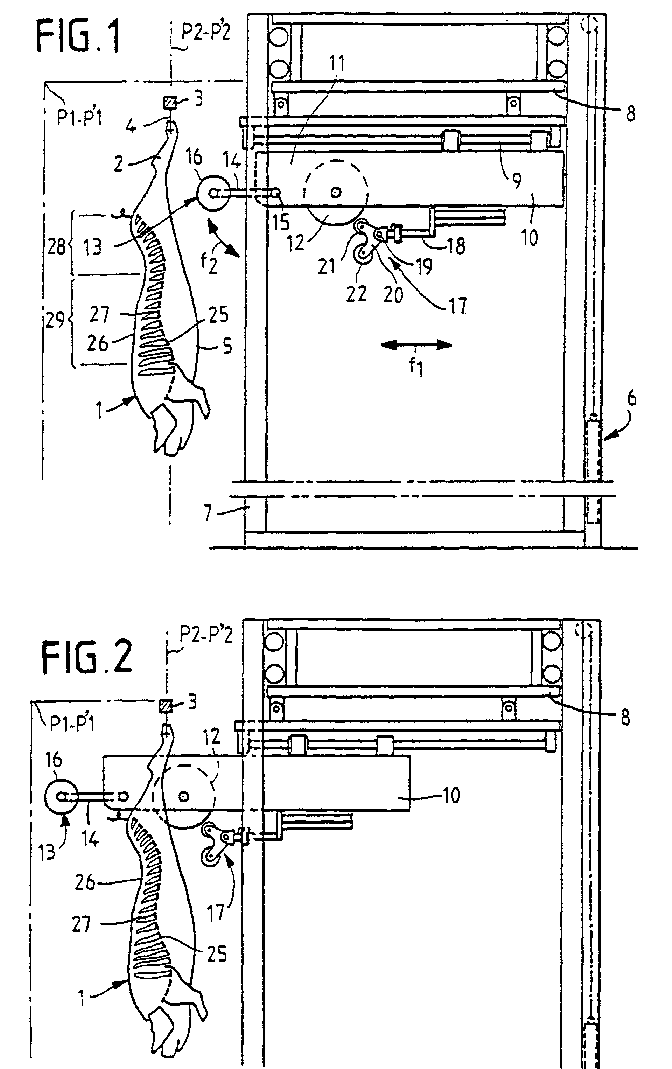

La **fig. 1** montre une installation de fente d'une carcasse **1** d'animal de boucherie suspendue par les pattes arrière **2** à un transporteur **3** à défilement continu ou discontinu. Le transporteur **3** peut être constitué par un convoyeur de forme et de construction appropriées, permettant de suspendre et de déplacer la carcasse **1** par l'intermédiaire d'un organe de suspension **4,** tel qu'un palonnier, aux extrémités duquel les pattes arrière **2** sont accrochées.

La suspension de la carcasse **1** est effectuée de manière qu'elle présente sa face ventrale **5** en regard des postes d'intervention de la ligne d'abattage, parmi lesquels se situe un poste **6** de fente qui comprend un bâti **7** capable d'assurer le guidage d'un châssis **8** pouvant être déplacé selon un plan vertical **P**_{**1**}**-P'**_{**1**} d'une position haute, telle que représentée, à une position basse par des moyens moteurs classiques non illustrés et ne faisant pas partie directement de l'objet de l'invention.

Le châssis **8** supporte, par l'intermédiaire de moyens de guidage **9,** tels que des glissières, un chariot **10** qui peut être animé d'un déplacement alternatif selon la flèche **f**_{**1**} par des moyens moteurs connus et non représentés. La direction de déplacement selon la flèche **f**_{**1**} est considérée comme perpendiculaire à un plan **P**_{**2**}**-P'**_{**2**} de déplacement de la carcasse **1.**

Le chariot **10** comporte une poutre **11** rigide portant un organe de coupe **12** qui est constitué, par exemple, par une scie circulaire susceptible d'être animée d'un mouvement de rotation par l'intermédiaire d'un organe moteur porté par la poutre **11** et non représenté aux dessins. Un tel organe et son mode de liaison à la scie doivent, en effet, être considérés comme ayant fait l'objet de nombreuses publications disponibles. Ces moyens ne relèvent pas directement de l'invention. L'organe de coupe **12** pourrait aussi être constitué par des couteaux animés d'un mouvement d'oscillation alternative dans le plan vertical **P**_{**1**}**-P'**_{**1**} par un organe moteur. Un tel dispositif relève, lui aussi, de l'art antérieur connu.

La poutre **11** porte, à sa partie terminale antérieure, c'est-à-dire celle orientée vers le plan **P**_{**2**}**-P'**_{**2**}**,** un organe **13,** dit de guidage externe, composé d'un bras mobile **14** pivotant autour d'un axe horizontal **15** et portant, à une extrémité libre, un dispositif de guidage **16.** Le bras **14** est susceptible d'être animé, par un organe moteur, tel que par exemple un vérin hydraulique, pneumatique ou analogue, non représenté, d'un déplacement selon la flèche **f**_{**2**} à partir d'une position stable d'attente, telle qu'illustrée à la **fig. 1.**

La poutre **11** porte, par ailleurs, en dessous et légèrement en retrait de l'organe **12,** un organe **17,** dit de guidage interne, composé d'un bras **18** portant, par un axe de pivotement horizontal **19,** un palonnier **20** supportant deux paires superposées de galets, dites supérieure **21** et inférieure **22.**

A partir de la position illustrée à la **fig. 1,** le procédé de fente d'une carcasse se déroule de la façon suivante, en considérant, pour plus de facilité, que cette opération intervient à poste fixe, c'est-à-dire que la carcasse **1** est arrêtée par le convoyeur **3** face au poste de fente **6** dans une position de suspension considérée stable.

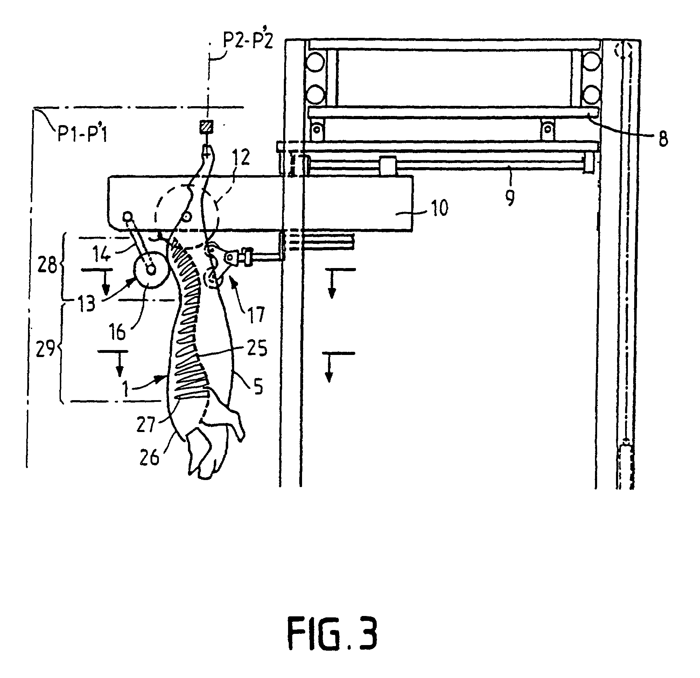

Le chariot **10** est alors animé d'un mouvement visant à faire sortir la poutre **11** pour l'amener à traverser le plan **P**_{**2**}**-P'**_{**2**}, de telle sorte que la scie **12** soit placée à l'aplomb du rachis ou de la colonne vertébrale **25** de la carcasse, en étant située entre les pattes arrière **2.** Les paires de galets **21** et **22** de l'organe **16** sont alors orientées en appui contre la face interne dorsale **5** le long de la colonne vertébrale **25,** comme cela est illustré par les **fig. 2** et **3.**

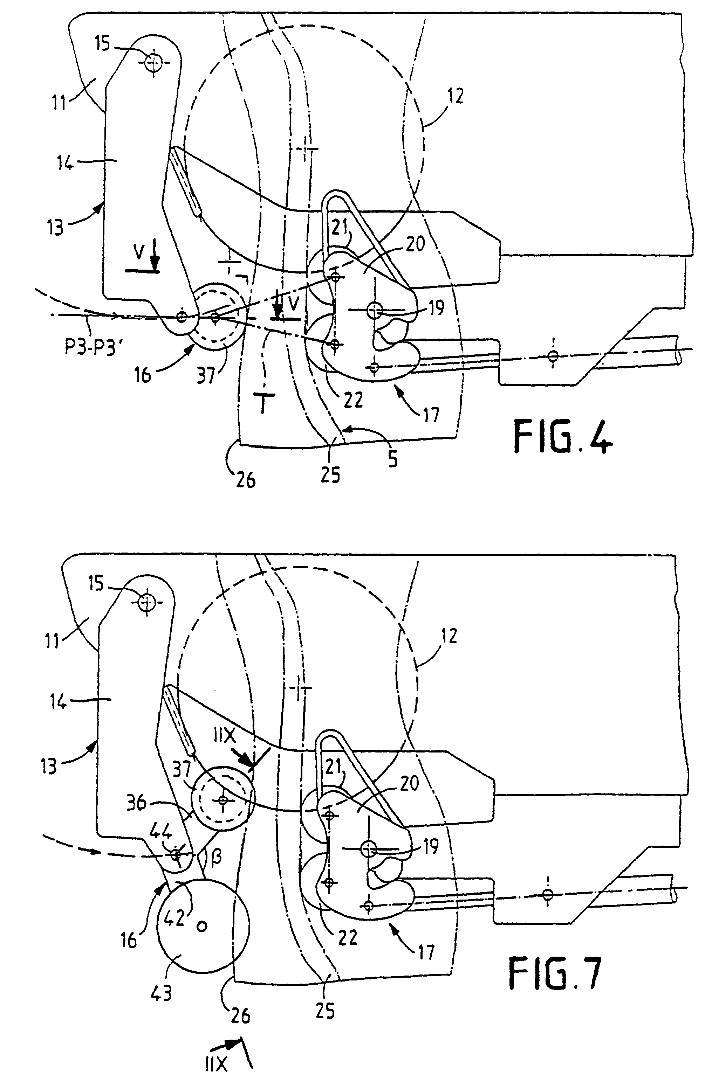

La **fig. 3** montre que, dans une étape suivante, le bras **14** est commandé en pivotement de manière à venir presser le dispositif de guidage **16** sur la face externe **26** de la carcasse **1,** de manière antagoniste à l'organe de guidage interne **17,** comme l'illustre également, à plus grande échelle, la **fig. 4.**

Dans cet état, l'organe de coupe **12** est commandé en rotation et, simultanément, le châssis **8** est animé d'un déplacement descendant, de manière à fendre la carcasse **1** selon le plan vertical de coupe **P**_{**1**}**-P'**_{**1**}. Au cours de ce déplacement, l'organe de guidage **17** suit la conformation naturelle de la face interne **5** de la carcasse par l'intermédiaire de l'axe d'articulation **19,** alors que l'organe de guidage externe **13** suit la conformation externe de la carcasse **1** par l'intermédiaire de l'axe horizontal **15.** Simultanément, les organes de guidage interne **17** et externe **13,** au fur et à mesure de leur progression le long de la colonne vertébrale **25,** agissent de manière à faire coincider le plan de coupe **P**_{**1**}**-P'**_{**1**} et le plan de symétrie de chacune des vertèbres du rachis **25** pour obtenir une division de la carcasse en deux demi-carcasses sensiblement égales.

Comme cela ressort des **fig. 1** à **3,** la forme et plus particulièrement la longueur de l'apophyse **27** des vertèbres évolue le long du rachis **25.** Cette longueur augmente continûment d'une région dite sacro-lombaire **28** à une autre dite dorsale **29** de la colonne vertébrale **25,** de sorte que cette augmentation influe sur la conformation de la face externe **26** de la carcasse **1.** A cette influence de la forme du squelette sur la morphologie de la carcasse, s'ajoute celle de la distribution de la musculature sur le rachis **25.** En effet, dans la région lombaire **28,** les muscles dorsaux trouvent leur point d'ancrage sur les vertèbres et la musculature est concentrée de part et d'autre du rachis **25,** de sorte que la face externe **26** présente un sillon central. En revanche, dans la région dorsale, les muscles s'évasent pour couvrir les côtes et leur masse n'est plus concentrée au voisinage du rachis **25.** La face externe **26** présente alors une épine dorsale saillante.

Le procédé selon l'invention vise donc à tenir compte d'une telle évolution morphologique. A cette fin, ce procédé consiste à adapter une zone d'appui de l'organe de guidage externe **13** de manière à offrir un premier ensemble de surfaces d'appui, dites externes, adaptées à la morphologie de la face externe **26** depuis la région sacro-lombaire **28** jusqu'à une région de transition lombo-dorsale. Les surfaces de ce premier ensemble prennent appui sur la masse musculaire de part et d'autre du sillon et du plan de coupe **P**_{**1**}**-P'**_{**1**}. Pour suivre l'évolution de la face externe **26,** le procédé consiste à adapter une zone d'appui de l'organe de guidage externe **13** de manière à offrir un deuxième ensemble de surfaces d'appui, dites internes, adaptées à la conformation de la région dorsale **29.** Les surfaces d'appui de ce deuxième ensemble viennent presser la carcasse de part et d'autre de l'échine saillante.

Les **fig. 4** à **6** illustrent un premier exemple de réalisation du dispositif de guidage **16** équipant l'organe de guidage externe **13** et permettant de mettre en oeuvre le procédé conforme à l'invention. L'organe de guidage **13** est donc réalisé de telle manière que, pour coopérer avec la face externe évolutive **26,** il offre, par le dispositif de guidage **16,** une zone d'appui s'adaptant justement automatiquement à l'évolution de cette face externe **26.** Le dispositif de guidage **16** est destiné, lorsqu'il est adapté à l'extrémité libre du bras mobile **14,** à être centré sur le plan de coupe **P**_{**1**}**-P'**_{**1**}.

Selon ce premier exemple, le dispositif de guidage **16** est formé d'un moyeu **35** portant, par l'intermédiaire de deux bras **36,** un système d'appui **37** sur la face externe **26** de la carcasse. Les deux bras **36** sont disposés de part et d'autre du plan de coupe **P**_{**1**}**-P'**_{**1**}.

Le système d'appui **37** est composé, de préférence mais non exclusivement, de deux paires **38, 39** de galets fous et indépendants. Les galets de chacune des paires **38** ou **39** sont symétriques l'un de l'autre par rapport au plan de coupe **P**_{**1**}**-P'**_{**1**}**,** de sorte que les paires peuvent être qualifiées de paire interne **39** et externe **38** en fonction de leur position relative au plan **P**_{**1**}**-P'**_{**1**}. Dans l'exemple illustré, les quatre galets **38** et **39** possèdent un même axe de rotation Δ_{**1**}. Les quatre galets **38, 39** présentent, de plus, chacun une surface périphérique de forme sensiblement tronconique convergent en direction du plan de coupe **P**_{**1**}**-P'**_{**1**}. Ces galets sont constitués, de manière classique, par une couronne en matériau à faible coefficient de frottement montée sur un moyeu épaulé fixé sur les bras **36** du dispositif de guidage **16.**

Enfin, les galets **38, 39** présentent chacun un rayon suffisant pour ne pas risquer de meurtrir la face externe **26** et éviter tout contact des bras **36** avec cette dernière lorsqu'ils sont appliqués contre la carcasse **1.** Dans le même sens, les galets externes **38** présentent, de préférence, une surface d'appui crantée qui assure leur roulement sur la carcasse.

Les paires de galets **38** et **39** constituent deux sous-ensembles fonctionnels distincts et engendrent, respectivement, deux paires de surfaces d'appui externe **38**_{**1**} et interne **39**_{**2**}**,** à symétrie de révolution d'axe **Δ**_{**1**} et **Δ**_{**2**}**,** qui sont, dans l'exemple illustré aux **fig. 4** à **6,** de préférence, confondues. Les surfaces d'appui **38**_{**1**} et **39**_{**2**} définissent, dans un plan de référence **P**_{**3**}**-P'**_{**3**} contenant les axes Δ_{**1**}, Δ_{**2**} et choisi pour simplifier l'illustration sensiblement horizontal, comme cela ressort de la **fig. 4**, deux lignes d'appui dite externe **l**_{**1**} et interne **l**_{**2**} en considération des surfaces externe **38**_{**1**} et interne **39**_{**2**}**.** Les lignes externe **l**_{**1**} et interne **l**_{**2**} sont sensiblement parallèles et espacées d'une distance **d** supérieure à 0, jusqu'à 30 mm. De plus, il est à considérer que, pour cet exemple, les galets externes **38** présentent un diamètre nominal supérieur à celui des galets internes **39.**

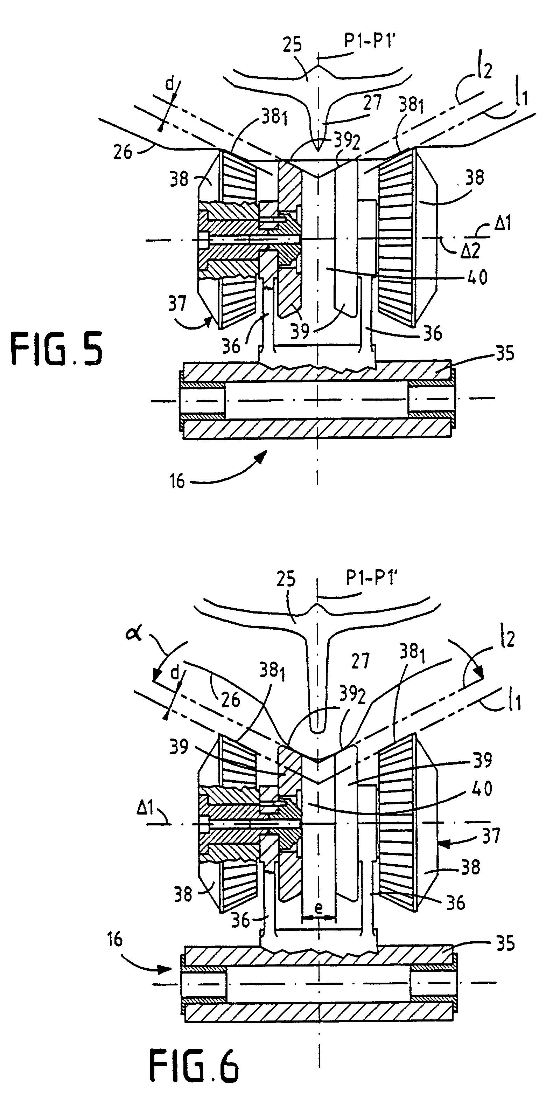

Compte tenu de la conicité des galets **38, 39,** les lignes **l**_{**1**} et **l**_{**2**} possèdent chacune une forme en "V" de guidage symétrique par rapport au plan de coupe **P**_{**1**}**-P'**_{**1**}, alors bissecteur. Les "V" de guidage possèdent des pointes ou sommets orientés vers les axes de révolution **Δ**_{**1**}, **Δ**_{**2**} et un angle α au sommet d'une valeur comprise entre environ 10° et 60° et, de préférence, égal à 30°. Les surfaces d'appui **38**_{**1**} et **39**_{**2**} matérialisent donc, dans la zone d'appui, deux sortes de gorges de guidage présentant des sections droites axiales en forme de "V". Dans l'exemple illustré **fig. 5** et **6,** les surfaces internes **39**_{**2**} et les surfaces externes **38**_{**1**} sont, supplémentairement, sensiblement parallèles, mais cela ne constitue pas une condition impérative à la réalisation d'un dispositif de guidage conforme à l'invention.

Enfin, le système d'appui **37** présente, de manière préférée, un évidement central **40** symétrique par rapport au plan de coupe **P**_{**1**}**-P'**_{**1**} et défini par l'espacement des galets internes **39.** L'évidement central **40** présente une largeur e, mesurée perpendiculairement au plan **P**_{**1**}**-P'**_{**1**}, comprise entre environ 3 mm et 50 mm.

Les ordres de grandeur donnés ci-dessus à titre d'exemples pour la distance **d,** l'angle α et la largeur **e** correspondent à des valeurs adaptées à des carcasses de porcs européens, mais il est clair que d'autres valeurs, n'entrant pas dans les intervalles cités, pourraient être retenues pour un dispositif de guidage externe conçu pour des carcasses d'animaux de boucherie d'autres espèces.

Le dispositif de guidage **16,** pourvu du système d'appui **37** tel qu'il vient d'être décrit, est destiné à être adapté, par le moyeu **35,** sur l'extrémité libre du bras mobile **14.** Dans l'exemple illustré, lorsque le dispositif de guidage **16** et l'organe de guidage interne **17** sont pressés contre la carcasse **1,** l'axe de révolution **Δ**_{**1**} et les axes des paires de galets internes supérieure **21** et inférieure **22** définissent un triangle **T** acutangle. De manière préférée, le triangle **T** est sensiblement isocèle lorsque les axes des paires de galets **21, 22** de l'organe de guidage interne **17** occupent un alignement sensiblement vertical.

L'organe de guidage externe **13** ainsi conçu permet d'effectuer une fente de la carcasse **1** selon l'invention et de tenir compte de l'évolution de la conformation de la face externe **26** lors de la progression de la coupe le long de la colonne vertébrale **25.**

L'opération de fente est effectuée en commençant par la zone sacro-lombaire **28.** En raison de la faible longueur relative des apophyses **27** et de la masse musculaire de l'animal, la face externe **26** présente, dans cette zone **28** et selon un plan de coupe horizontal, une conformation en creux ou sillon ou tout au moins plane, comme l'illustre la **fig. 5.** Dans cette région lombaire **28,** ce sont donc les surfaces d'appui externes **38**_{**1**} qui offrent une première zone de calage et contribuent, principalement, au guidage de la carcasse. En effet, l'écart relativement important des galets externes **38** confère une grande stabilité à la carcasse et évite toute oscillation de celle-ci autour d'un axe vertical. De plus, l'effet conjugué de la pression de l'organe de guidage interne **17** et de celle de l'organe externe **13** permet une pénétration des galets externes **38** dans la masse musculaire de la carcasse **1** et améliore ainsi le guidage.

Ensuite, comme le montre la **fig. 6,** la face externe **26** évolue pour présenter, dans la région dorsale **29,** une conformation saillante ou échine résultant d'une augmentation de la longueur des apophyses **27** et d'une réduction de la masse musculaire sous-jacente.

Le guidage, effectué principalement par les surfaces externes **38**_{**1**} dans la zone sacro-lombaire **28,** se prolonge donc jusqu'au niveau d'une région lombo-dorsale. Puis, dans la région dorsale **29,** les surfaces d'appui internes **39**_{**2**} se substituent progressivement aux surfaces externes **38**_{**1**} dans leur fonction de guidage. Il doit être considéré que, dans la région de transition lombo-dorsale, les surfaces d'appui externes **38**_{**1**} et internes **39**_{**2**} peuvent agir conjointement.

Le "V" de guidage, engendré par les surfaces d'appui internes **39**_{**2**} et situé, dans l'exemple, nettement en avant du "V" de guidage des surfaces externes **38**_{**1**} relativement à l'axe **Δ**_{**1**}, offrent alors une deuxième zone de calage qui vient emboîter l'échine et permet d'assurer un guidage efficace de la face externe **26.**

Afin de permettre une bonne transition entre les actions des surfaces d'appui externes **38**_{**1**} et internes **39**_{**2**}**,** il est nécessaire d'adapter la valeur de la distance **d** séparant les lignes d'appui **l**_{**1**}**, l**_{**2**} à la morphologie moyenne des carcasses devant être fendues. De même, la largeur de l'évidement central **40** doit aussi être adaptée à ce même paramètre. De plus, les galets externes **38,** appuyant sur une masse musculaire importante, présentent chacun, de préférence, une surface d'appui **38**_{**1**} supérieure à celle **39**_{**2**} des galets internes **39** travaillant, au voisinage de l'échine, sur une masse fibreuse réduite.

Le guidage en deux temps, résultant du dispositif selon l'invention associé à l'organe de guidage externe, permet une adaptation à l'évolution morphologique de la face externe **26** en prenant en compte, de façon positive, la variation naturelle apophysaire des vertèbres. Cette adaptation permet de disposer d'un réel guidage relatif entre l'organe de coupe **12** et le rachis **25,** et d'exécuter de la sorte une fente régulière symétrique, même dans le cas de malformations.

Les phénomènes, intervenant dans le guidage de la colonne vertébrale **25** lors de l'exécution de la fente, sont essentiellement variables, mais les résultats obtenus par la mise en oeuvre de l'invention permettent d'avancer que l'efficacité du dispositif d'appui **16** peut être mise au compte, d'une part, de l'adaptation des surfaces d'appui **38**_{**1**} et **39**_{**2**} à la conformation de la face externe **26** et, d'autre part, du guidage qui pourrait résulter de l'évidement central **40** formant une sorte de gorge de guidage pour l'échine de la carcasse.

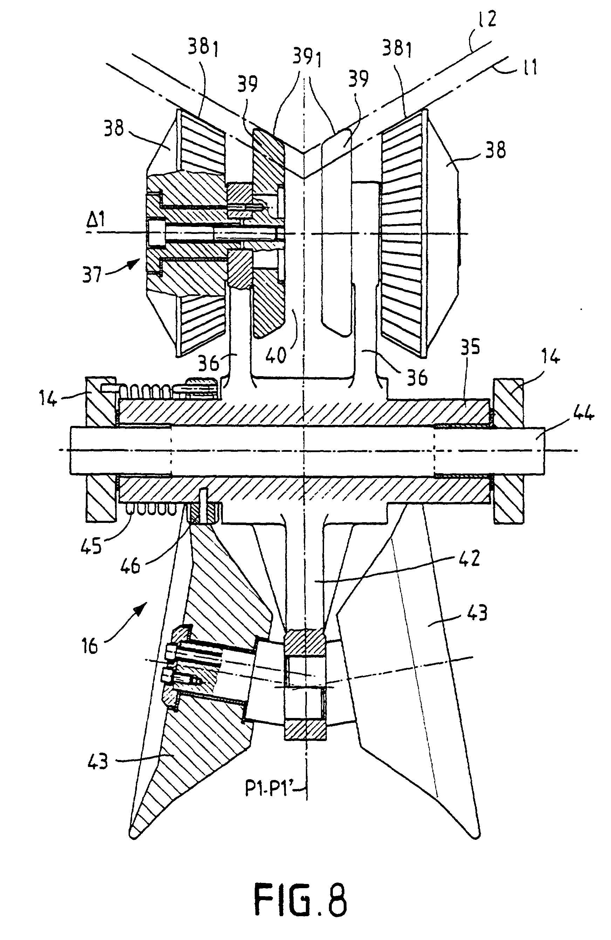

Les **fig. 7** et **8** illustrent une forme préférée d'un dispositif de guidage **16** conforme à l'invention. Selon cette forme préférée, le dispositif de guidage **16** est constitué, comme cela apparaît à la **fig. 8,** d'un moyeu **35** et, de part et d'autre de ce moyeu, d'un système d'appui **37,** du type de celui décrit en relation avec les **fig. 5** et **6,** et d'un bras **42** solidaire du moyen **35** et équipé, à son extrémité libre, d'une paire de galets fous **43** présentant, en combinaison, sensiblement la forme d'un diabolo. Le dispositif de guidage **16** forme alors un palonnier destiné à être adapté à l'extrémité du bras mobile **14** sur un axe de pivotement **44** par le moyeu **35,** le système d'appui **37** étant situé au-dessus de l'ensemble de galets **43.** Afin que le système d'appui **37** et l'ensemble de galets 43 puisse être en contact simultanément avec la face externe **26,** les bras **36** et **42** forment, de préférence, un angle β d'une valeur comprise entre 100 et 180°. Le système **37** et l'ensemble **43** définissent alors deux zones distinctes d'appui sur la carcasse **1.** Enfin, selon une autre disposition constructive de l'invention, préférée mais non impérative, la position relative du palonnier constituant le dispositif de guidage **16** et du bras mobile **14,** est asservie au moyen d'un organe de rappel élastique, tel qu'un ressort hélicoïdal **45** solidaire, par l'une de ses extrémités, du bras **14** et, par l'autre, d'une bague **46** clavetée sur le moyeu **35.** La bague **46** permet d'effectuer un réglage de la précontrainte du ressort **45.**

Lorsque l'organe de coupe **12** est constitué par une lame rotative, comme cela apparaît à la **fig. 7,** l'organe de guidage interne **17** et l'organe de guidage externe **13** sont disposés de façon, qu'en position de travail, le système d'appui **37** et l'ensemble de galets supérieurs internes **21** soient positionnés en vis-à-vis à proximité de la périphérie de la lame de coupe **12.**

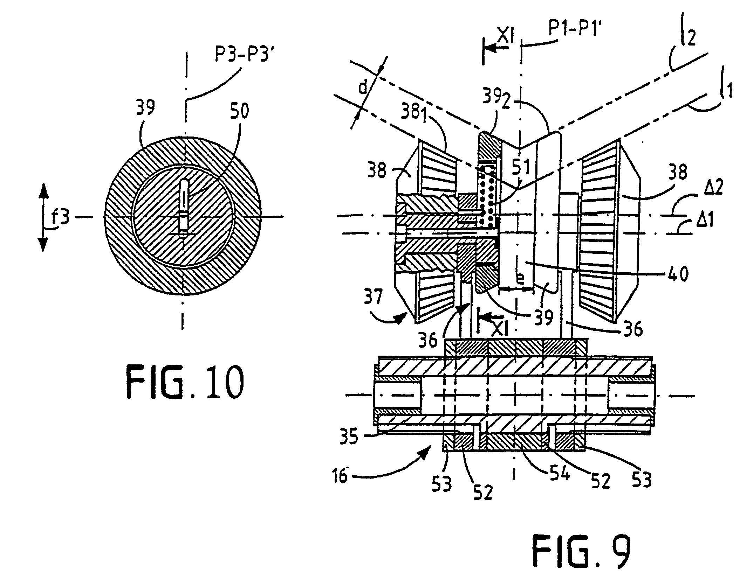

La **fig. 10** illustre une autre variante d'un dispositif de guidage externe **16,** du type de celui décrit en relation avec les **fig. 5** et **6.** Selon cette variante, la distance **d,** séparant les lignes d'appui **l**_{**1**} et **l**_{**2**}**,** est réglable au moyen d'un dispositif **49** agissant sur la position relative de l'axe de rotation **Δ**_{**2**} des galets internes **39** par rapport à l'axe de rotation **Δ**_{**1**} des galets externes **38.**

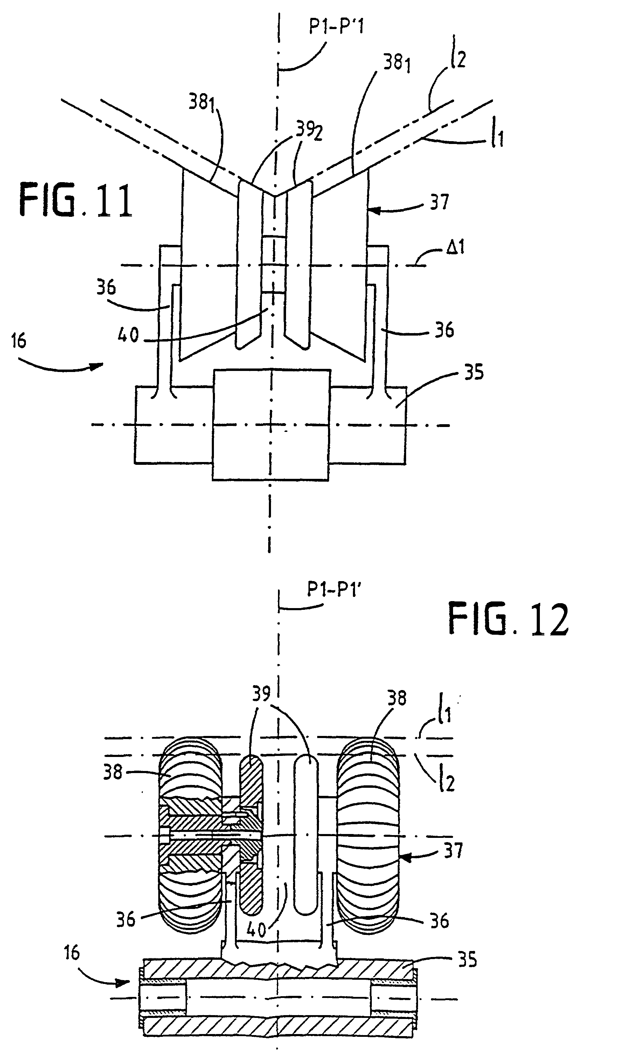

Ce dispositif de réglage **49** est constitué, sur chacun des galets **39,** d'une glissière centrale **50** ménagée dans le moyeu épaulé des galets **38,** de manière que l'organe de fixation du moyeu sur le bras **36** possède une course de déplacement **f**_{**3**} dans le plan **P**_{**3**}**-P'**_{**3**}**,** comme cela ressort de la **fig. 11.** La position relative du galet **38** et de l'organe de fixation correspondant est asservie au moyen d'un organe élastique **51** qui tend à éloigner la ligne d'appui **l**_{**2**} définie par les galets internes **39** de celle **l**_{**1**} définie par les galets externes **38,** de sorte que les organes élastiques **51** tendent à presser les galets internes **39** contre la face externe **26** de la carcasse.

Selon une autre disposition de cette variante, la largeur e de l'évidement central **40** est elle aussi réglable. A cette fin, les bras **36** sont portés par deux bagues indépendantes **52,** clavetées et enfilées sur le moyeu **35** pour être immobilisées au moyen de contre-écrous **53.** Les deux bagues **52** sont maintenues éloignées au moyen d'une bague d'entretoisement **54** interchangeable. La modification de l'épaisseur de cette bague d'entretoisement **54** permet d'adapter la largeur e de l'évidement central **40** à la morphologie des carcasses devant être traités par l'installation de fente.

Selon l'invention, les surfaces d'appui interne **39**_{**2**} et externe **38**_{**1**} peuvent également être offertes par un sous-ensemble fonctionnel formé d'une unique paire de galets à écartement réglable au moyen d'un dispositif d'ajustement dynamique, tel qu'un vérin hydraulique, pneumatique ou analogue, non représenté.

La **fig. 12** illustre une variante de réalisation d'un système d'appui présentant des surfaces d'appui **38**_{**1**} et **39**_{**2**}**,** analogues à celles décrites en relation avec les **fig. 5** et **6** mais présentées par un unique galet fou reproduisant l'enveloppe périphérique des paires de galets internes **39** et externes **38.**

La variante de réalisation du dispositif de guidage **16,** illustrée à la **fig. 13,** montre un système d'appui constitué par deux paires de galets internes **39** et externes **38** présentant des surfaces périphériques arrondies. Selon cette variante, les lignes d'appui **l**_{**1**} et **l**_{**2**} définies, respectivement, par la paire externe **38** et la paire interne **39** sont parallèles et perpendiculaires au plan de coupe **P**_{**1**}**-P'**_{**1**}**.** De plus, la ligne d'appui **l**_{**2**} est située en retrait par rapport à la ligne d'appui **l**_{**1**}**.**

Dans la description ci-dessus, le dispositif de guidage externe **16** est mis en oeuvre sur l'installation de fente en association avec un dispositif de guidage interne formé par un palonnier équipé de galets, mais il est clair que le dispositif de guidage externe selon l'invention peut être associé à tout autre type d'organe de guidage interne.

De même, le dispositif de guidage **16** pour la mise en oeuvre du procédé conforme à l'invention pourrait comporter un système d'appui **37** à surfaces évolutives agissant par glissement et non par roulement sur la face externe **26.**

## Revendications

1. Procédé de fente d'une carcasse d'animal de boucherie suspendue par les pattes arrière du type consistant :
- à introduire un organe de coupe **(12)** entre les pattes arrière **(2),**
- à presser contre une face interne **(5)** de la carcasse **(1)** un organe de guidage interne **(17),**
- à appuyer contre une face externe **(26)** de la carcasse **(1)** au niveau de la colonne vertébrale **(25)** un organe de guidage externe **(13)** agissant à l'encontre de l'organe de guidage interne **(17),**
- à mettre en fonction l'organe de coupe **(12),**
- et à déplacer l'ensemble selon un plan vertical de coupe (**P**_{**1**}**-P'**_{**1**}),
**caractérisé en ce que**, pendant le déplacement selon le plan de coupe (**P**_{**1**}**-P'**_{**1**}), il consiste à adapter une zone d'appui de l'organe de guidage externe **(13)** sur la carcasse **(1)** en fonction de l'évolution morphologique de la face externe **(26)** le long de la colonne vertébrale **(25),** de manière à offrir un premier ensemble de surfaces d'appui, dites externes **(38**_{**1**}**),** adaptées à la morphologie de la face externe **(26)** d'une région sacro-lombaire **(28)** jusqu'à une région lombo-dorsale et un deuxième ensemble de surfaces d'appui, dites internes **(39**_{**2**}**),** adaptées à la morphologie d'une région dorsale **(29),** les surfaces d'appui externes (**38**_{**1**}) et internes (**39**_{**2**}) s'étendant dans deux plans parallèles et espacés.

2. Procédé de fente selon la revendication 1, **caractérisé en ce qu'**il consiste à adapter une zone d'appui de l'organe de guidage externe **(13),** de manière que les surfaces d'appui internes **(39**_{**2**}**)** et externes **(38**_{**1**}**)** assurent une action simultanée dans une zone de transition lombo-dorsale.

3. Procédé de fente selon la revendication 1 ou 2, **caractérisé en ce que** les surfaces d'appui externes **(38**_{**1**}**)** et internes **(39**_{**2**}**)** sont offertes par un même sous-ensemble fonctionnel.

4. Procédé de fente selon la revendication 1 ou 2, **caractérisé en ce que** les surfaces d'appui externes **(38**_{**1**}**)** et internes **(39**_{**2**}**)** sont offertes par au moins deux sous-ensembles fonctionnels distincts.

5. Dispositif de guidage à galet, du type destiné à appuyer sur la face externe d'une carcasse **(1)** d'un animal de boucherie suspendue par les pattes arrière **(2),** au niveau de la colonne vertébrale **(25),** en alignement avec un plan vertical de déplacement (**P**_{**1**}**-P'**_{**1**}), le dispositif mettant en oeuvre le procédé selon l'une quelconque des revendications 1 à 4,
**caractérisé en ce qu'**il possède un système d'appui **(37)** comportant au moins un galet fou **(38, 39)** qui définit au moins deux paires, interne **(38**_{**1**}**)** et externe **(39**_{**2**}**),** de surfaces d'appui à symétrie de révolution d'axes parallèles **(Δ**_{**1**}**, Δ**_{**2**}**)** qui sont contenus dans un plan de référence **(P**_{**3**}**-P'**_{**3**}**)** et perpendiculaires au plan vertical (**P**_{**1**}**-P'**_{**1**}), les surfaces de chacune des paires étant symétriques par rapport au plan vertical (**P**_{**1**}**-P'**_{**1**}) et définissant, dans le plan de référence **(P**_{**3**}**-P'**_{**3**}**),** deux lignes d'appui sensiblement parallèles **(l**_{**1**}**, l**_{**2**}**)** et espacées.

6. Dispositif de guidage à galet selon la revendication 5, **caractérisé en ce qu'**il possède un système d'appui dont les paires de surface d'appui **(38**_{**1**}**, 39**_{**2**}**)** définissent, dans le plan de référence **(P**_{**3**}**-P'**_{**3**}**),** deux lignes d'appui **(l**_{**1**}**, l**_{**2**}**)** parallèles formant chacune sensiblement un "V" de guidage dont le sommet est dirigé vers les axes (Δ_{**1**}, Δ_{**2**}).

7. Dispositif de guidage à galet selon la revendication 6, **caractérisé en ce que** les lignes d'appui **(l**_{**1**}**, l**_{**2**}**)** forment deux "V" de guidage parallèles présentant un angle au sommet compris entre environ 10° et 60°.

8. Dispositif de guidage à galet selon l'une des revendication 5 à 7, **caractérisé en ce qu'**il possède un système d'appui **(37)** dont les deux lignes d'appui (**l**_{**1**}**, l**_{**2**}) sont espacées d'une distance réglable.

9. Dispositif de guidage à galet selon l'une des revendications 5 à 8, **caractérisé en ce qu'**il possède un système d'appui comportant un évidement central **(40)** symétrique par rapport au plan vertical **(P**_{**1**}**-P'**_{**1**}**)**.

10. Dispositif de guidage à galet selon la revendication 9, **caractérisé en ce qu'**il possède un système d'appui (**37**) dont l'évidement central **(40)** présente une largeur **(e)** réglable.

11. Dispositif de guidage à galet selon la revendication 5, **caractérisé en ce qu'**il possède un système d'appui **(37)** comportant deux paires de galets fous, dites interne **(39)** et externe **(38),** définissant, respectivement, les deux paires de surface d'appui **(39**_{**2**}**, 38**_{**1**}**).**

12. Dispositif de guidage à galet selon la revendication 11, **caractérisé en ce que** les galets **(38, 39)** présentent chacun une surface périphérique d'appui de forme sensiblement tronconique.

13. Installation de fente de carcasses d'animaux de boucherie, du type comprenant :
- un châssis **(8)** mobile verticalement selon un plan de coupe (**P**_{**1**}**-P'**_{**1**}), une poutre porteuse **(11)** montée mobile horizontalement par rapport au châssis **(8)** pour être amenée, à partir d'une position d'effacement, à traverser un plan de déplacement vertical (**P**_{**2**}**-P'**_{**2**}) suivi par une carcasse à fendre **(1)** et qui est suspendue par les pattes arrière **(2),**
- un organe de coupe **(12)** porté par la poutre,
- un organe de guidage externe **(13)** escamotable, porté par la partie antérieure de la poutre **(11)** pour être appuyé contre la face dorsale externe **(26)** de la carcasse **(1),**
- et un organe de guidage interne **(17)** porté par la poutre **(11)** pour être situé sous l'organe de coupe **(12),** appliqué contre la face dorsale interne **(5)** et agir à l'encontre de l'organe de guidage externe **(13),**
**caractérisé en ce que** l'organe de guidage externe **(13)** est formé par un bras mobile **(14)** et un dispositif de guidage **(16)** selon l'une des revendications 5 à 13.

14. Installation de fente selon la revendication 18, **caractérisée en ce que** :
- l'organe de guidage interne **(17)** comprend un palonnier **(20)** monté pivotant sur un axe horizontal **(19)** et portant deux ensembles de galets, faces superposées, dits supérieur **(21)** et inférieur **(22),**
- et le dispositif de guidage externe **(16)** comporte un unique système d'appui **(37),** lequel est disposé de façon à former un triangle acutangle avec les deux ensembles de galets fous **(21, 22)** de l'organe de guidage interne **(17)** lorsque le dispositif externe **(16)** et l'organe interne **(17)** sont en appui sur la carcasse **(1).**

15. Installation de fente selon la revendication 14, **caractérisée en ce que** le dispositif de guidage **(16)** est constitué pour former un palonnier pivotant, d'un moyeu **(35)** adapté sur le bras mobile **(14)** par un axe **(44)** et équipé :
- d'une part, d'un système d'appui **(37)** porté par au moins un bras **(36),**
- et, d'autre part, d'un système de galets fous **(43)** porté, en dessous du système d'appui **(37),** par un bras **(42)**, le bras **(36)** du système d'appui **(37)** et le bras **(42),** portant les galets fous **(43),** formant un angle (β) compris entre environ 100° et 180°.

16. Installation de fente selon la revendication 15, **caractérisée en ce que** la position angulaire du dispositif de guidage **(16)** par rapport au bras mobile **(14)** est asservie au moyen d'un organe de rappel élastique **(45).**

17. Installation de fente selon la revendication 15 ou 16, **caractérisée en ce que** :
- l'organe de coupe **(12)** est constitué par une lame rotative,
- l'organe de guidage interne **(17)** comprend un palonnier **(20)** monté pivotant sur un axe horizontal **(19)** et portant deux ensembles de galets, faces superposées, dits supérieur **(21)** et inférieur **(22),**
- et le système d'appui **(37)** et l'ensemble supérieur **(21)** de galets sont, lorsque le dispositif de guidage externe **(16)** et l'organe de guidage interne **(17)** sont en contact avec la carcasse **(1),** en vis-à-vis et leurs points de contact avec ladite carcasse **(1)** sont situés à proximité de la périphérie de la lame de coupe **(12).**

## Patentansprüche

1. Spaltverfahren eines Gerippes eines an den Hinterbeinen aufgehängten Schlachttiers mit folgenden Schritten:
- Einführen eines Schneidorgans (12) zwischen den Hinterbeinen (2),
- Andrücken eines internen Führungsorgans (17) gegen eine Innenseite (5) des Gerippes (1),
- Andrücken eines externen Führungsorgans (13) gegen eine Außenseite (26) des Gerippes (1) in Höhe der Wirbelsäule (25), das dem internen Führungsorgan (17) entgegenwirkt,
- Einschalten des Schneidorgans (12),
- und Versetzen der Einheit nach einer vertikalen Schnittebene (P₁-P'₁),
**dadurch gekennzeichnet, dass** es während der Versetzung nach der Schnittebene (P₁-P'₁) darin besteht, einen Stützbereich des externen Führungsorgans (13) je nach der morphologischen Entwicklung der Außenseite (26) entlang der Wirbelsäule (25) an das Gerippe (1) anzupassen, um eine erste Einheit von so genannten externen Stützflächen (38₁), die der Morphologie der Außenseite (26) einer Kreuzbein-Lendenregion (28) bis zu einer Lenden-Rückenregion angepasst sind, und eine zweite Einheit von so genannten internen Stützflächen (39₂), die der Morphologie einer Rückenregion (29) angepasst sind, zu bieten, wobei sich die externen Stützflächen (38₁) und die internen Stützflächen (39₂) nach zwei parallelen und beabstandeten Ebenen erstrecken.

2. Spaltverfahren nach Anspruch 1, **dadurch gekennzeichnet, dass** es darin besteht, einen Stützbereich des externen Führungsorgans (13) anzupassen, so dass die interne (39₂) und die externe (38₁) Stützfläche eine gleichzeitige Aktion in einem Lenden-Rücken-Übergangsbereich gewährleisten.

3. Spaltverfahren nach Anspruch 1 oder 2, **dadurch gekennzeichnet, dass** die externe (38₁) und die interne (39₂) Stützfläche von einer gleichen funktionellen Untereinheit geboten werden.

4. Spaltverfahren nach Anspruch 1 oder 2, **dadurch gekennzeichnet, dass** die externe (38₁) und die interne (39₂) Stützfläche von mindestens zwei verschiedenen funktionellen Untereinheiten geboten werden.

5. Rollenführungsvorrichtung, die sich gegen die Außenseite eines Gerippes (1) eines an den Hinterbeinen aufgehängten Schlachttieres (2), in Höhe der Wirbelsäule (25), ausgerichtet nach einer vertikalen Verschiebungsebene (P₁-P'₁), anlegen soll, wobei die Vorrichtung das Verfahren nach einem der Ansprüche 1 bis 4 umsetzt, **dadurch gekennzeichnet, dass** sie ein Stützsystem (37) mit mindestens einer Schlepprolle (38, 39) besitzt, die mindestens zwei Paar, intern (38₁) und extern (39₂), Stützflächen mit rotationssymmetrischen Parallelachsen (Δ1, Δ2) definiert, die in einer lotrecht zur vertikalen Ebene (P₁-P'₁) verlaufenden Referenzebene (P₃-P'₃) enthalten sind, wobei die Oberflächen jedes der Paare in Bezug auf die vertikale Ebene (P₁-P'₁) symmetrisch sind und auf der Referenzebene (P₃-P'₃) zwei etwa parallele und beabstandete Stützlinien (l₁, l₂) definieren.

6. Rollenführungsvorrichtung nach Anspruch 5, **dadurch gekennzeichnet, dass** sie ein Stützsystem besitzt, dessen Stützflächenpaare (38₁, 39₂) auf der Referenzebene (P₃-P'₃) zwei etwa parallele Stützlinien (l₁, l₂) definieren, die jeweils etwa ein Führungs-"V" bilden, dessen Gipfel zu den Achsen (Δ1, Δ2) hin gerichtet ist.

7. Rollenführungsvorrichtung nach Anspruch 6, **dadurch gekennzeichnet, dass** die Stützlinien (l₁, l₂) zwei parallele Führungs-"V" bilden, die auf dem Gipfel einen Winkel von etwa 10° bis 60° aufweisen.

8. Rollenführungsvorrichtung nach einem der Ansprüche 5 bis 7, **dadurch gekennzeichnet, dass** sie ein Stützsystem (37) besitzt, dessen beiden Stützlinien (l₁, l₂) in einem einstellbaren Abstand angeordnet sind.

9. Rollenführungsvorrichtung nach einem der Ansprüche 5 bis 8, **dadurch gekennzeichnet, dass** sie ein Stützsystem besitzt, das eine mittlere, in Bezug auf die vertikale Ebene (P₁-P'₁) symmetrische Vertiefung (40) aufweist.

10. Rollenführungsvorrichtung nach Anspruch 9, **dadurch gekennzeichnet, dass** sie ein Stützsystem (37) besitzt, dessen mittlere Vertiefung (40) eine einstellbare Breite (e) aufweist.

11. Rollenführungsvorrichtung nach Anspruch 5, **dadurch gekennzeichnet, dass** sie ein Stützsystem (37) mit zwei Schlepprollen, intern (39) und extern (38), besitzt, die jeweils zwei Paar Stützflächen (39₂, 38₁) definieren.

12. Rollenführungsvorrichtung gemäß Anspruch 11, **dadurch gekennzeichnet, dass** die Rollen (38, 39) jeweils eine periphere, etwa kegelstumpfartige Stützfläche aufweisen.

13. Spaltanlage von Gerippen von Schlachttieren, mit:
- einem vertikal nach einer Schnittebene (P₁-P'₁) versetzbarem Rahmen (8), einem Tragbalken (11), der in Bezug auf den Rahmen (8) horizontal versetzbar montiert ist, um aus einer zurückgezogenen Position eine vertikale Versetzungsebene (P₂-P'₂) gefolgt von einem zu spaltenden, an den Hinterbeinen (2) aufgehängtem Gerippe (1) zu durchqueren,
- einem vom Balken getragenen Schneidorgan (12),
- einem einziehbaren externen Führungsorgan (13), das vom vorderen Teil des Balkens (11) getragen wird, um gegen die externe Rückenseite (26) des Gerippes (1) gedrückt zu werden,
- einem internen Führungsorgan (17), das vom Balken (11) getragen wird, um unter dem gegen die interne Rückenseite (5) anliegenden Schneidorgan (12) angeordnet zu werden und dem externen Führungsorgan (13) entgegen zu wirken,
**dadurch gekennzeichnet, dass** das externe Führungsorgan (13) aus einem beweglichen Arm (14) und einer Führungsvorrichtung (16) nach einem der Ansprüche 5 bis 13 besteht.

14. Spaltanlage nach Anspruch 18, **dadurch gekennzeichnet, dass**:
- das interne Führungsorgan (17) ein um eine horizontale Achse (19) drehbar montiertes Gestänge (20) aufweist, das zwei Rolleneinheiten mit übereinander gelagerten Flächen, die obere (21) und die untere (22), trägt,
- und dass die externe Führungsvorrichtung (16) ein einziges Stützsystem (37) umfasst, das so angeordnet ist, dass es mit den beiden Schlepprolleneinheiten (21, 22) des internen Führungsorgans (17) ein spitzwinkeliges Dreieck bildet, wenn die externe Vorrichtung (16) und das interne Organ (17) gegen das Gerippe (1) anliegen.

15. Spaltvorrichtung nach Anspruch 14, **dadurch gekennzeichnet, dass** die Führungsvorrichtung (16) ausgebildet ist, um ein drehbares Gestänge mit einer an den beweglichen Arm (14) über eine Achse (44) angepassten Nabe (35) zu bilden, ausgerüstet mit:
- einerseits einem von mindestens einem Arm (36) getragenen Stützsystem (37),
- und andererseits mit einem unter dem Stützsystem (37) von einem Arm (42) getragenen Schlepprollensystem (43), wobei der Arm (36) des Stützsystems (37) und der die Schlepprollen (43) tragende Arm (42) einen Winkel (β) von etwa 100° bis 180° bilden.

16. Spaltanlage nach Anspruch 15, **dadurch gekennzeichnet, dass** die Winkelposition der Führungsvorrichtung (16) in Bezug auf den beweglichen Arm (14) durch ein federndes Rückstellorgan (45) gesteuert wird.

17. Spaltanlage nach Anspruch 15 oder 16, **dadurch gekennzeichnet, dass**:
- das Schneidorgan (12) aus einem rotierenden Messer besteht,
- das interne Führungsorgan (17) ein Gestänge (20) umfasst, das drehbar um eine horizontale Achse (19) montiert ist und zwei Rolleneinheiten mit übereinander gelagerten Flächen, der oberen (21) und der unteren (22), trägt,
- und dass das Stützsystem (37) und die obere Rolleneinheit (21), wenn die externe Führungsvorrichtung (16) und das interne Führungsorgan (17) mit dem Gerippe (1) in Kontakt stehen, sich gegenüberliegen und sich ihre Kontaktpunkte mit dem besagten Gerippe (1) in der Nähe der Peripherie des Scheidmessers (12) befinden.

## Claims

1. A method for splitting a butchery animal carcass suspended by the hind legs, of the type consisting in:
- introducing a cutting member (12) between the hind legs (2),
- pressing an internal guidance member (17) against the internal face (5) of the carcass (1),
- pressing against an external face (26) of the carcass (1), level with the vertebral column (25), an external guidance member (13) acting counter to the internal guidance member (17),
- starting up the cutting member (12), and
- moving the whole in a vertical cutting plane (P₁-P'₁),
**characterised in that**, during the movement in the cutting plane (P₁-P'₁), it consists in adapting an area of abutment of the external guidance member (13) on the carcass (1) according to the morphological changes in the external face (26) along the vertebral column (25), so as to offer a first set of so-called external abutment surfaces (38₁), adapted to the morphology of the external face (26) of a sacrolumbar region (28) as far as a lumbodorsal region, and a second set of so-called internal (39₂) abutment surfaces, adapted to the morphology of a dorsal region (29), the external (38₁) and internal (39₂) abutment surfaces extending in two parallel planes spaced apart from each other.

2. A splitting method according to Claim 1, **characterised in that** it consists in adapting an abutment zone for the external guidance member (13), so that the internal (39₂) and external (38₁) abutment surfaces provide a simultaneous action in a lumbodorsal transition area.

3. A splitting method according to Claim 1 or 2, **characterised in that** the external (38₁) and internal (39₂) abutment surfaces are offered by the same functional subassembly.

4. A splitting method according to Claim 1 or 2, **characterised in that** the external (38₁) and internal (39₂) abutment surfaces are offered by at least two distinct functional subassemblies.

5. A roller guidance device, of the type intended to bear on the external face of the carcass (1) of a butchery animal suspended by the hind legs (2), level with the vertebral column (25), in alignment with a vertical movement plane (P₁-P'₁), the device implementing the method according to any one of Claims 1 to 4,
**characterised in that** it has an abutment system (37) including at least one loose roller (38, 39) which defines at least two pairs, internal (38₁) and external (39₂), of abutment surfaces with symmetry of revolution and parallel axes (Δ₁, Δ₂) which are contained in a reference plane (P₃-P'₃) and perpendicular to the vertical plane (P₁-P'₁), the surfaces of each of the pairs being symmetrical with respect to the vertical plane (P₁-P'₁) and defining, in the reference plane (P₃-P'₃), two substantially parallel abutment lines (I₁, I₂) spaced apart from each other.

6. A roller guidance device according to Claim 5, **characterised in that** it has an abutment system, in which the abutment surface pairs (38₁, 39₂) define, in the reference plane (P₃-P'₃), two parallel abutment lines (I₁, I₂) each forming substantially a guidance "V" whose apex is directed towards the axes (Δ₁, Δ₂).

7. A roller guidance device according to Claim 6, **characterised in that** the abutment lines (I₁, I₂) form two parallel guidance "V"s having an angle at the apex of between approximately 10° and 60°.

8. A roller guidance device according to one of Claims 5 to 7, **characterised in that** it has an abutment system (37) in which the two abutment lines (I₁, I₂) are spaced apart by an adjustable distance.

9. A roller guidance device according to one of Claims 5 to 8, **characterised in that** it has an abutment system with a central recess (40) symmetrical with respect to the vertical plane (P₁-P'₁).

10. A roller guidance device according to Claim 9, **characterised in that** it has an abutment system (37) whose central recess (40) has an adjustable width (e).

11. A roller guidance device according to Claim 5, **characterised in that** it has an abutment system (37) with two pairs of loose rollers, referred to as internal (39) and external (38), defining respectively the two abutment surface pairs (39₂, 38₁).

12. A roller guidance device according to Claim 11, **characterised in that** the rollers (38, 39) each have a peripheral abutment surface with a substantially frustoconical shape.

13. An installation for splitting butchery animal carcasses, of the type comprising:
- a frame (8) able to move vertically in a cutting plane (P₁-P'₁), a carrier beam (11) mounted so as to be able to move horizontally with respect to the frame (8) in order to be caused, from a retracted position, to pass through a vertical movement plane (P₂-P'₂), followed by a carcass to be split (1) which is suspended by the hind legs (2),
- a cutting member (12) carried by the beam,
- a retractable external guidance member (13), carried by the front part of the beam (11) in order to be pressed against the external dorsal face (26) of the carcass (1), and
- an internal guidance member (17) carried by the beam (11) in order to be situated under the cutting member (12), applied against the internal dorsal face (5), and to act counter to the external guidance member (13),
**characterised in that** the external guidance member (13) is formed by a movable arm (14) and a guidance device (16) according to one of Claims 5 to 13.

14. A splitting installation according to Claim 18, **characterised in that**:
- the internal guidance member (17) comprises a bar (20) mounted so as to pivot on a horizontal axis (19) and carrying two sets of rollers, with their faces superimposed, referred to as upper (21) and lower (22),
- and the external guidance device (16) has a single abutment system (37), which is disposed so as to form an acute-angled triangle with the two sets of loose rollers (21, 22) of the internal guidance device (17) when the external device (16) and the internal member (17) are in abutment on the carcass.

15. A splitting installation according to Claim 14, **characterised in that** the guidance device (16) is made up so as to form a pivoting beam, from a hub (35) fitted on the movable arm (14) by means of a shaft (44) and equipped:
- on the one hand with an abutment system (37) carried by at least one arm (36), and
- on the other hand with a system of loose rollers (43) carried, below the abutment system (37), by an arm (42), the arm (36) of the abutment system (37) and the arm (42), carrying the loose rollers (43), forming an angle (β) of between approximately 100° and 180°.

16. A splitting installation according to Claim 15, **characterised in that** the angular position of the guidance device (16) with respect to the movable arm (14) is slaved by means of an elastic return member (45).

17. A splitting installation according to Claim 15 or 16, **characterised in that**:
- the cutting member (12) consists of a rotary blade,
- the internal guidance member (17) comprises a beam (20) mounted so as to pivot on a horizontal shaft (19) and carrying two sets of rollers, with their faces superimposed, referred to as upper (21) and lower (22),
- and the abutment system (37) and the upper assembly (21) of rollers are, when the external guidance device (16) and the internal guidance member (17) are in contact with the carcass (1), facing each other and their points of contact with the said carcass (1) are situated close to the periphery of the cutting blade (12).
